# EUROPEAN PATENT SPECIFICATION

(11) **EP 1 495 226 B1**
(45) Date of publication and mention of the grant of the patent: **06.08.2008**
(21) Application number: 03719515.3
(22) Date of filing: 31.03.2003
(51) Int. Cl.: F01B 23/10, F04B 1/12, F01B 3/02

(54) **VARIABLE STROKE/CLEARANCE MECHANISM**
MECHANISMUS MIT VARIABLEM HUB/VARIABLEM SPIEL
MECANISME A COURSE/ESPACE LIBRE VARIABLE

(30) Priority: 01.04.2002 US 368525 P
(43) Date of publication of application: 12.01.2005
(73) Proprietor: R. Sanderson Management, Inc., Denton, TX 76208 (US)
(72) Inventor: SANDERSON, Albert, E., Carlisle, MA 01741 (US)
(74) Representative: Hitchcock, Esmond Antony
(86) International application number: PCT/US2003/009702
(87) International publication number: WO 2003/085259

(56) References cited:
- WO-A-01/11214
- DE-A1- 4 303 745
- GB-A- 2 358 845
- US-A- 1 131 614
- US-A- 2 539 880
- US-A- 3 590 188
- US-A- 4 345 174
- US-A- 4 473 763
- US-A- 5 007 385
- US-A- 5 351 657
- US-A- 5 397 922

## Description

This present disclosure relates to piston assemblies. Particularly, it relates to such assemblies in which pistons arranged for axial movement in respective cylinders are coupled to a shaft, the axes of movement of the pistons being spaced from the shaft axis. The pistons are coupled to the shaft by means of a transition arm.

Reference is directed to International Patent Publication No: WO 01/11214 which discloses a piston assembly of the above kind, in which a plurality of double-ended or single-ended pistons are arranged around a shaft and coupled thereto by a transition arm and a rotating member mounted on the shaft. That publication is particularly concerned with mechanism for balancing the assembly.

Reference is also directed at International Patent Publication No: WO 99/14471 which discloses multiple piston assemblies arranged around and coupled to a central shaft. This publication is particularly concerned with mechanisms for altering the compression ratio in the respective piston cylinder mechanisms, and the alteration of the compression ratio while the assembly is operating, as either an engine or a pump.

The disclosure of the present specification is also directed at a piston assembly in which piston/cylinder combinations are arranged around a shaft and coupled thereto by a transition arm and a rotatable member mounted on the shaft. More particularly, as claimed herein three pistons housed in respective cylinders are spaced 120° around the shaft axis, with the axes of movement of the pistons being spaced from the shaft axis. The transition arm is coupled to the three pistons, and has a drive arm eccentrically coupled to the rotatable member on the shaft such that there is an angle between the drive arm and the shaft axis. The transition arm thus translates between rotational movement of the rotational member and shaft, and reciprocal, linear in space and sinusoidal in time motion of the pistons relative to the cylinders. Each piston and cylinder combination includes a magnet and coil configured to undergo relative motion with the relative motion of the pistons and cylinders, and at least one of the piston and cylinder combinations is double-ended with a second magnet and coil configured to undergo relative motion with the piston and cylinder. Assemblies according to the invention can therefore convert a single-phase AC power to three-phase AC power and vice versa.

The rotating member which functions with the transition arm to form the coupling between the pistons and the shaft, can also function as a flywheel. The rotating member can include a counterweight. The coil in each piston and cylinder combination can be positioned inside or outside of the respective magnet.

Further details of the disclosed piston assembly will be apparent from the following description given by way of example, and in which reference will be made to the accompanying schematic drawings wherein:
Figure 1 illustrates a linear generator/motor assembly;
Figure 2 illustrates a particular magnet and coil arrangement in the piston cylinder combination;
Figure 3 shows a compressor or pump assembly including a single linear motor;
Figure 4 illustrates a piston assembly that converts between electrical phases; and
Figure 5 illustrates how an assembly can drive another multi-piston assembly.

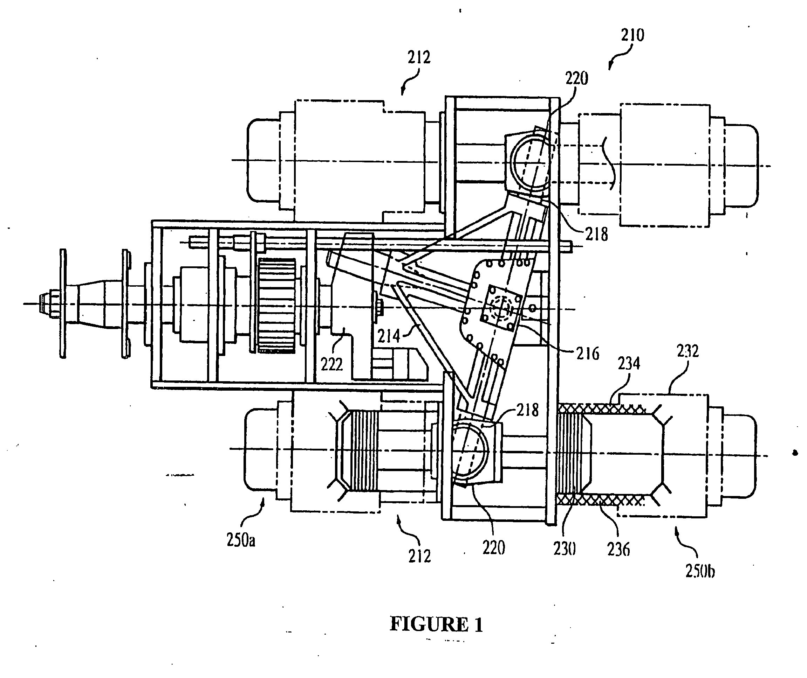

The linear generator or motor 210 shown in Figure 1 includes one or more piston assemblies 212 mounted circumferentially about a transition arm 214. Transition arm 214 is mounted to a universal joint 216, and drive pins 218 couple transition arm 214 to piston assemblies 212 via piston joint assemblies 220. Transition arm 214 is also coupled to a flywheel 222. When functioning as a generator, rotation of flywheel 222 causes motion of piston assemblies 212 that is linear in space and sinusoidal in time (ie, simple harmonic motion). When functioning as a motor, the motion of piston assemblies 212 causes rotation of flywheel 222.

Each piston assembly 212 terminates in a permanent magnet 230 that reciprocates with the piston assembly. Each piston assembly 212 is housed within a non-magnetic cylinder 232 having a coil 234 located within the cylinder wall 236. Coil 234 is wound circumferentially about magnet 230. Rotation of flywheel 222 causes reciprocating, linear motion of magnet 230 such that alternating current is produced at coil 234 at the revolving frequency of flywheel 222. The waveform is adjustable by changing the shape of the coil and/or the magnetic field.

With three 120° spaced cylinders the alternating current produced is three-phase, Since the motion of magnet 230 is linear in space and sinusoidal in time and the voltage produced is proportion to the speed of the magnet. With three 120° spaced cylinders a coil winding having a uniform number of turns per inch produces a sinusoidal voltage output as long as the magnet remains within the coil during the reciprocating motion.

As a linear generator, rotation of flywheel 222 causes linear motion of piston assemblies 212 to generate power. As a linear motor, applying ac power to coil 234 causes piston assemblies 212 to reciprocate, which causes flywheel 222 to rotate. This is accomplished with no brushes or commutators.

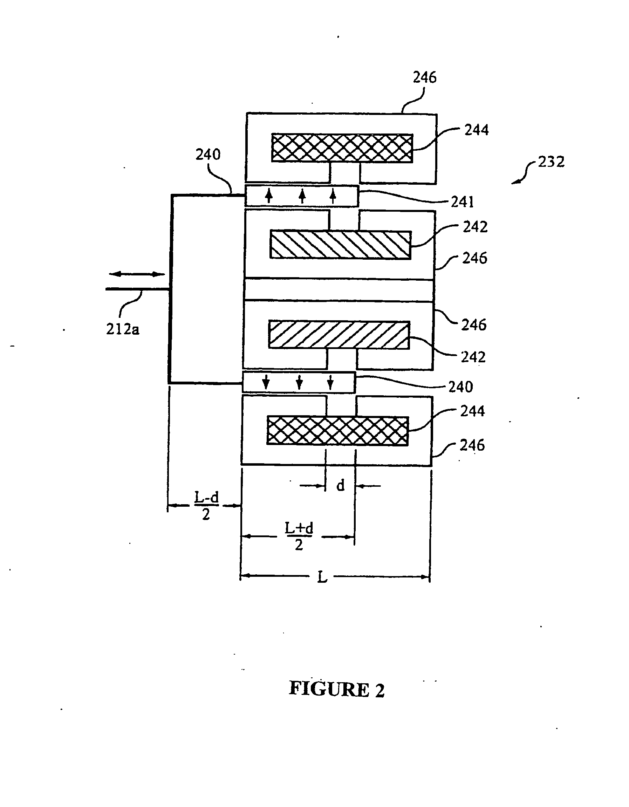

Piston assemblies 212 can be single-ended or double-ended pistons. Magnet 230 and coil 234 can be positioned on one or both sides of a double-ended piston. Coil 234 can be inside or outside magnet 230, or both. As shown in Figure 2, piston assembly 212a terminates in a magnetic tube 240 having a tubular portion 241 magnetized at right angles to the axis. Cylinder 232a includes an inner, cylindrical coil 242 positioned within tube 240 and an outer, cylindrical coil 244 positioned around the outside of tube 240. Coils 242,244 are surrounded by transformer laminations 246. Magnetic tube 240 oscillates within coils 242,244 driven by motion of piston assembly 212a, producing a sinusoidal voltage output. For a coil and lamination length of L and a gap width of d, the tube oscillates over a stroke distance (L-d)/2, and the tube is of length (L+d)/2. The length of the tube and the stroke can be adjusted to perfect the sinusoidal waveform.

Referring to Figure 1, in a hybrid generator configuration, one side 250a of a double-ended piston assembly 212 functions as a gasoline engine, and the other side 250b generates ac power. In a hybrid pump or compressor configuration, side 250b is a motor with ac power applied to coil 230 causing piston assembly 212 to reciprocate, and side 250a functions as a pump or compressor. In the hybrid configurations, the direct push from power to load along the line between two opposing ends of the piston assembly increases efficiency by eliminating rotating friction in the power path, and largely eliminates forces that need to be passed through the drive pins 218, transition arm 214, and universal joint 216. The drive pins 218, transition arm 214, and universal joint 216 do very little work, ie, just synchronizing the pistons, and therefore can be made very light. The coil and magnet of Figure 2 can also be used in the hybrid configurations.

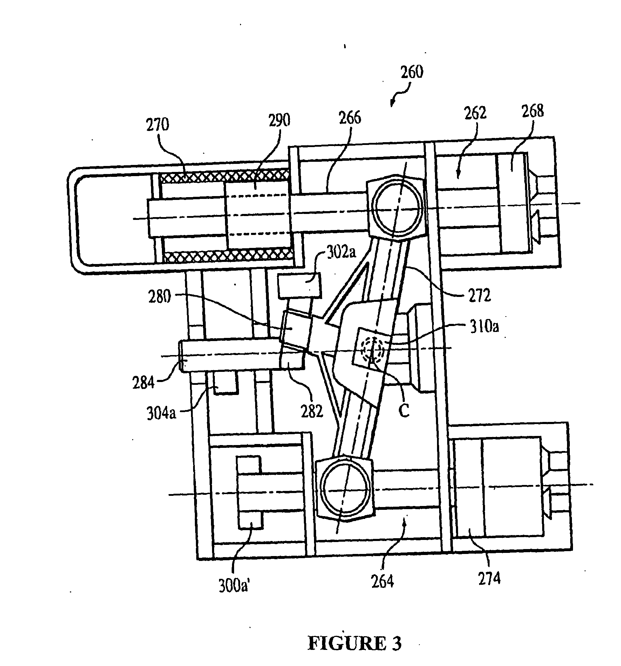

The compressor or pump assembly 260 shown in Figure 3 includes a double-ended piston assembly 262 and a single-ended piston assembly 264. Connected to a piston rod 266 of piston assembly 262 opposite piston head 268 is a linear electromagnetic motor 270, such as described above. The single motor 270 can drive both piston assemblies 262,264 because motor 270 can both push and pull piston assembly 262. When motor 270 is driving to the right, as viewed in Figure 3, the force is transferred directly from motor 270 to piston head 268, and thus to the load. Piston head 268 is driven to the right, and the motion of piston rod 266 is transferred by transition arm 272 to piston assembly 264, moving piston head 274 of piston assembly 264 to the left for an intake stroke. When motor 270 is driven to the left, the force is transferred directly to piston head 268, moving piston head 268 to the left for an intake stroke. Again, the motion of piston rod 266 is transferred by transition arm 272 to piston assembly 264, now moving piston head 274 to the right, and thus to the load.

The forces applied to piston assemblies 262,264 are not transmitted through nose pin 280, flywheel 282, or drive shaft 284. The nose pin, flywheel, and drive shaft simply act to keep the motions of the pistons synchronized and sinusoidal. The assembly is efficient due to the high efficiency of motor 270, typically over 90%, and the direct transfer of load from motor 270 to piston assemblies 262,264 through the transition arm acting as an efficient rocker arm.

Assembly 260 can be balanced, generally as described in Publication No: WO 01/11214 referred to above. In particular, assembly 260 includes five counterweights 300a', 302a, 304a, and two not shown coupled to the transition arm with one positioned above the plane of the paper in Figure 3, and one below the plane of the paper, such as counterweights 1160,1162 shown in FIG 45 of the aforesaid publication. Counterweight 300a' acts to equalize the weight of piston assemblies 262,264, ie, accounts for the added weight to piston assembly 262 from the magnet 290 of motor 270 and any extra length of piston rod 266. For a two piston assembly flat configuration, counterweights 302a, 304a create a rotary couple equal in magnitude and 180 degrees out of phase to the rotary couple of the piston assemblies and counterweights 1160,1162 about the centre, C, or universal joint 310a.

The hybrid generator can be used to drive the wheels of a vehicle through linear motors at the wheels, particularly three-phase or more linear motors with rotary shaft output. As the engine speed increases, the frequency of the a-c power produced rises, and thus the speed of the wheels increases synchronously with the generator. Alternatively, a hydraulic three-phase line can connect a hybrid pump to hydraulic motors at the wheels; or a single high pressure hydraulic line can run from the engine to each wheel, and then a hydraulic motor with valved input and output lines transfers power from the engine to the wheels without the need to be synchronous.

If the position of universal joint 216 is moved to act as a zero clearance compressor or a variable stroke constant compression ratio engine, as described in Publication No: WO 99/14471 referred to above, the linear generator or motor is not sensitive to the precise position of the magnet. As the stroke is adjusted for some purpose on the engine side, the other side continues to function normally. Some overrun on the length of the magnet is required. The linear motor is also compatible for use as an integral electric motor/compressor.

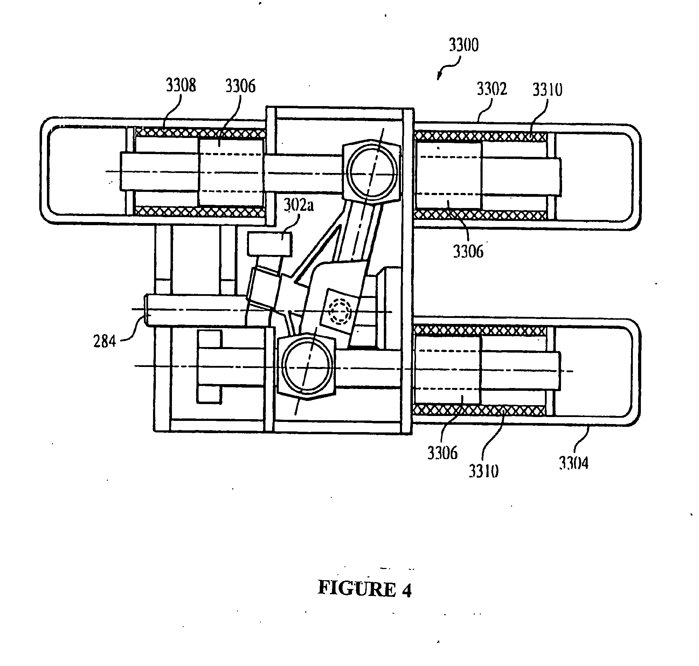

It is often useful or necessary to convert ac power from one form to another, ie, from single-phase 120-volt power to three-phase 240-volt power, or vice versa. The mechanism shown in Figure 4 performs this conversion using the left side of the mechanism for single-phase input or output, and the right side for three-phase input or output. The assembly 3300 includes a double-ended piston assembly 3302, and two single-ended piston assemblies 3304 (only one of which can be seen in the view of Figure 4) that are spaced apart 120° from the double-ended piston assembly. All four pistons (one of which can not be seen in the view of Figure 4 contain magnetic material 3306, and all four cylinders have windings for the input and output voltages as follows: winding 3308 on the left-hand side is wound for 120 volts ac, and three windings 3310 on the right side are wound for 240 volts ac, with the wires sized to support the required current demands.

The application of 120 volts to coil 3308 causes rotation of the shaft 284 and counterweight 302a at a constant synchronous speed equal to the ac input frequency, and correspondingly, each of the output coils 3310 generates a voltage at the same frequency. The magnitude of this secondary voltage depends, other things being equal, primarily upon the ratio of turns between the input and output coils. In this case that ratio would be 2:1. Each output has the same voltage, but the phase relationship is in accordance with the relationship in space among the three coils, ie, 120° apart, to produce three-phase ac.

The mechanism works as well in reverse to convert three-phase 240-volt ac to a single-phase 120-volt ac power. The mechanism could also convert between other phases by using a different number or configuration of piston assemblies.

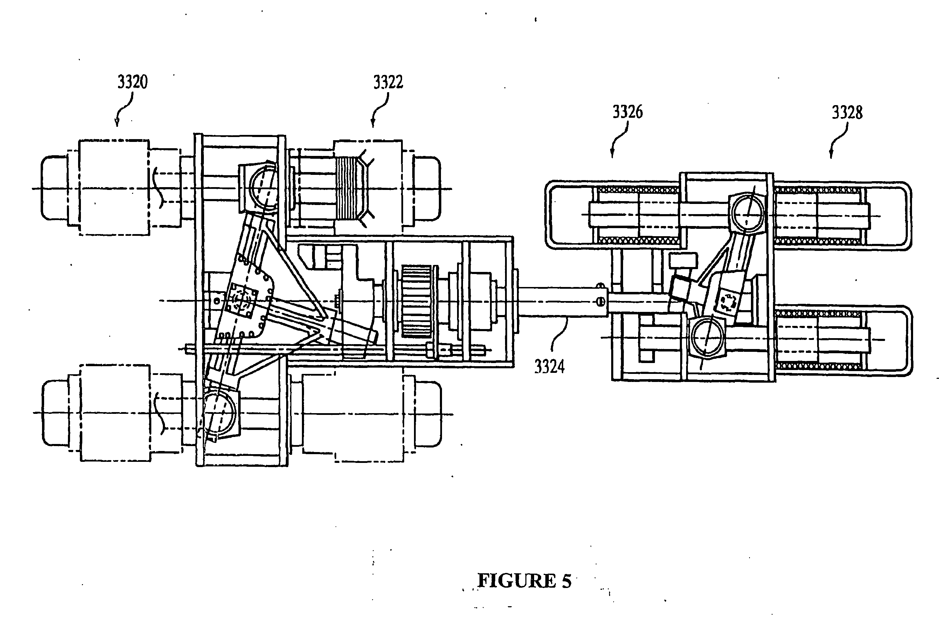

The output shaft from the flywheel of piston assemblies as described in Publication No: WO 01/11214 and WO 99/14471 can be used to drive the flywheel of piston assembly described herein, and vice versa. For example, as shown in Figure 5, gasoline engine pistons 3320 drive air compressor pistons 3322, and the output shaft 3324 drives a 120 volt single phase ac generator 3326, and a 240 volt three phase ac generator 3328.

## Claims

1. A piston assembly comprising a shaft; three pistons housed in respective cylinders spaced 120 degrees around the shaft axis with the axes of movement of the pistons being spaced from the shaft axis; a transition arm (214) coupled to the three pistons, and having a drive arm eccentrically coupled to a rotatable member (222) mounted on the shaft for rotation about the shaft axis such that there is an angle between the drive arm and the shaft axis, whereby the transition arm (214) translates between rotational movement of the rotatable member (222) and reciprocal, linear in space and sinusoidal in time motion of the pistons relative to the cylinders, each piston (212) and cylinder combination (232) including a magnet and coil configured to undergo relative motion with the relative motion of the pistons and cylinders, and at least one of the piston and cylinder combinations being double-ended with a second magnet and coil configured to undergo relative motion with the piston and cylinder.

2. The assembly of Claim 1 the coil in each piston and cylinder combination is positioned inside the magnet.

3. The assembly of Claim 1 wherein the coil in each piston and cylinder combination is positioned outside the magnet.

4. The assembly of any preceding Claim wherein the rotating member comprises a flywheel.

5. The assembly of any preceding Claim wherein the transition arm is coupled to a stationary support.

6. The assembly of Claim 5 wherein the support comprises a U-joint.

7. A three-phase electricity generator comprising an assembly according to any preceding Claim.

## Patentansprüche

1. Kolbenbaugruppe, die aufweist: eine Welle; drei Kolben, die in jeweiligen Zylindern aufgenommen werden, die 120 Grad um die Wellenachse beabstandet sind, wobei die Bewegungsachsen der Kolben von der Wellenachse beabstandet sind; einen Übergangsarm (214), der mit den drei Kolben verbunden ist und einen Arstriebsarm aufweist, der exzentrisch mit einem drehbaren Element (222) verbunden ist, das auf der Welle für eine Drehung um die Wellenachse so montiert ist, dass ein Winkel zwischen dem Antriebsarm und der Wellenachse zu verzeichnen ist, wobei der Übergangsarm (214) zwischen einer Rotationsbewegung des drehbaren Elementes (222) und einer hin- und hergehenden, räumlich linearen und zeitlich sinusförmigen Bewegung der Kolben relativ zu den Zylindern überträgt, wobei eine jede Kolben (212)- und Zylinderkombination (232) einen Magneten und eine Spule einschließt, so ausgebildet, dass sie eine relative Bewegung bei der relativen Bewegung der Kolben und der Zylinder erfahren, und wobei mindestens eine der Kolben- und Zylinderkombinationen doppelseitig mit einem zweiten Magneten und Spule sind, so ausgebildet, dass sie eine relative Bewegung mit dem Kolben und dem Zylinder erfahren.

2. Baugruppe nach Anspruch 1, wobei die Spule in jeder Kolben- und Zylinderkombination innerhalb des Magneten positioniert ist.

3. Baugruppe nach Anspruch 1, wobei die Spule in jeder Kolben- und Zylinderkombination außerhalb des Magneten positioniert ist.

4. Baugruppe nach einem der vorhergehenden Ansprüche, bei der das sich drehende Element ein Schwungrad aufweist.

5. Baugruppe nach einem der vorhergehenden Ansprüche, bei der der Übergangsarm mit einer stationären Halterung verbunden ist.

6. Baugruppe nach Anspruch 5, bei der die Halterung ein Kreuzgelenk aufweist.

7. Drehstromeleketrogenerator, der eine Baugruppe nach einem der vorhergehenden Ansprüche aufweist.

## Revendications

1. Assemblage de piston, comprenant un arbre ; trois pistons logés dans des cylindres respectifs espacés de 120 degrés autour de l'axe de l'arbre, les axes de déplacement des pistons étant espacés de l'axe de l'arbre ; un bras de transmission (214) accouplé aux trois pistons et comportant un arbre d'entraînement accouplé de manière excentrée à un élément rotatif (222) monté sur l'arbre en vue d'une rotation sur l'axe de l'arbre, de sorte à établir un angle entre le bras d'entraînement et l'axe de l'arbre, le bras de transition (214) effectuant ainsi une translation entre le déplacement rotatif de l'élément rotatif (222) et le déplacement alternatif, linéaire dans l'espace et sinusoïdal dans le temps, des pistons par rapport aux cylindres, chaque combinaison de piston (212) et de cylindre (232) englobant un aimant et une bobine configurés de sorte à être soumis à un déplacement relatif par suite du déplacement relatif des pistons et cylindres, au moins une combinaison des combinaisons de piston et de cylindre comportant une double extrémité avec un deuxième aimant et une deuxième bobine configurés de sorte à être soumis à un déplacement relatif avec le piston et le cylindre.

2. Assemblage selon la revendication 1, dans lequel la bobine de chaque combinaison de piston et de cylindre est positionnée à l'intérieur de l'aimant.

3. Assemblage selon la revendication 1, dans lequel la bobine de chaque combinaison de piston et de cylindre est positionnée à l'extérieur de l'aimant.

4. Assemblage selon l'une quelconque des revendications précédentes, dans lequel l'élément rotatif comprend un volant.

5. Assemblage selon l'une quelconque des revendications précédentes, dans lequel le bras de transition est accouplé à un support stationnaire.

6. Assemblage selon la revendication 5, dans lequel le support comprend un joint universel.

7. Générateur électrique triphasé comprenant un assemblage selon l'une quelconque des revendications précédentes.
